# EUROPEAN PATENT SPECIFICATION

(11) **EP 3 808 558 B1**
(45) Date of publication and mention of the grant of the patent: **12.01.2022**
(21) Application number: 19203915.4
(22) Date of filing: 17.10.2019
(51) Int. Cl.: B32B 17/10, B32B 27/08, B32B 27/30, B32B 38/00, B32B 38/04, B32B 38/10

(54) **PROCESS FOR SPLITTING PLASTICIZED PVB FILMS**
VERFAHREN ZUR SPALTUNG PLASTIFIZIERTER PVB-FILME
PROCÉDÉ DE SÉPARATION DE FILMS PVB PLASTIFIÉS

(43) Date of publication of application: 21.04.2021
(73) Proprietor: Kuraray Europe GmbH, 65795 Hattersheim (DE)
(72) Inventor: Schröter, Denis, 53844 Essen (DE)
(74) Representative: Janßen, Christian Oliver

(56) References cited:
- WO-A1-2018/225860
- JP-A- S5 521 280
- US-A- 4 013 745

## Description

The invention is directed to a process for splitting a film comprising at least two layers, comprising chemically different polyvinyl butyral resins into at least two separated layers.

Films based on plasticized polyvinyl butyral resins are long known as adhesive film for glass sheets. In order to improve sound damping of such films, it is further known to produce films with two, three or even more layers, each having different mechanical properties. Different mechanical properties are adjusted via the plasticizer content of the layers, where a higher plasticizer content yields a softer layer. Adjusting the plasticizer content and avoiding plasticizer migration requires different polyvinyl butyral resins in the layers. Various combinations of such so called "multi-layer" films are currently produced by co-extrusion of the layers in an industrial scale.

However, multi-layer films have poor rate of recycling, because the different polyvinyl butyral resins tend to have a poor miscibility/compatibility, resulting in agglomerations which are visible as haze. Since haze is unacceptable in glass laminations, only a very low amount of multilayer films can be recycled by adding into virgin material.

Accordingly, WO 2018/225860 suggests the use of a fixed blade to split a multilayered film. to split multilayered interlayers into separate layers.

However, there remains a need for an improved process to split and therefore, separate interlayers for laminated.

Accordingly, one objective of the present invention was a process for splitting and separating interlayers for laminates with an improved purity of the separated layers, higher throughput and/or lower maintenance costs.

Accordingly, object of the invention was a process for splitting an interlayer film for laminated glass wherein the interlayer film comprises at least one layer A, comprising at least one polyvinyl butyral resin A and at least one plasticizer PA and at least one layer B, comprising at least one polyvinyl butyral resin B and at least one plasticizer PB, wherein polyvinyl butyral resin A and B are chemically different characterized in that the films are cut with a cutting means in form of a band.

Preferably, the cutting means is a band knife or a band saw, more preferably the cutting means is a continuous band knife. The band can be welded and beveled, toothed or non-toothed, not rectified, or rectified on both edges and surfaces.

It has been surprisingly found that using a cutting means in the shape of a band, specifically a continuous band knife, the purity of the separated layers is drastically increased as compared to a fixed blade.

Band knifes have usually been developed for cutting non-sticking materials like polymer foams. However, it is now surprisingly been found that band knives are very useful to cut separate layers of plasticized, i.e. sticky, polyvinyl acetal films with very high accuracy. The advance of the band knife includes a longer life time as compared to a standing blade and the possibility to sharpen it during operation without down time (which would be required in case of a standing blade).

Additionally, the band can be easily cooled and moistened during operation which led to even less adhesion of the film material to the blade material and thus, to a higher accuracy and higher throughput.

Preferably, the band knife is horizontal and the film is fed horizontal as well.

The band knife can have different dimensions, preferably the length is from 1000 mm to 15000 mm, more preferably from 4000 to 8000 mm. The thickness of the band is preferably between 0.1 to 10 mm, preferably between 0.5 and 5 mm. The band width can be the same throughout the whole length of the band. Preferably, it is of nonuniform width with a width of 0.1 mm in its thinnest and 8 mm in its thickest part. The material of the cutting means used in the band is not specifically limited and includes, for example, stainless steel, carbon, high speed tool steel, etc.

In the present invention, the continuous band knife splits the film within layer A at a thickness of 50 to 99%, wherein 1 to 50% of layer A remain at layer B, or the continuous band knife splits the film within layer B at a thickness of 50 to 99%, wherein 1 to 50% of layer B remain at layer A.

The film may preferably comprise three layers with a sequence A/B/A. In this embodiment, the continuous band knife splits in a first step the film within the first layer A at a thickness of 50 to 99%, wherein 1 to 50% of the first layer A remain at layer B and in a second step within the second layer A at a thickness of 50 to 99%, wherein 1 to 50% of the second layer A remain at layer B.

Preferably, the film is fed between two rollers towards the cutting means.

Depending on the softness of the layers, the continuous band knife tends to cut into the softest layer and can hardly be guided back into the desired position. This can be avoided by feeding the film between two rollers towards the continuous band knife at a temperature of 10 to 20°C, most preferably from 13 to 18°C. Within this temperature range, the PVB films are usually soft enough to be sliced and have reduced stickiness. Accordingly, the splitting is preferably performed at a temperature from 0 º to 25 ºC, more preferably from 10 to 20°C.

Also preferably, the cutting means is guided between two stabilization means, more preferably by guiding it through two prism shaped stabilizers, which keep the cutting means in place.

Specifically, a film comprising three layers with a sequence A/B/A is fed between two rollers towards a continuous band knife at a temperature of 10 to 20°C.

After slicing, the layers are separated and rolled up. Again, cooling the layers to temperature of 10 to 20°C is advisable to avoid blocking.

The process is shown by way of example in Fig. 1 in vide view. The film is fed from the left between two rollers against the knife and thereby spliced into two layers. Suitable machinery for such process is available as "Bandknife Splitting Machines Type G" from Fecken-Kirfel GmbH & Co.

The different layers may contain one or more plasticizers that are common in this technical field and are known to the person skilled in the art. One or more plasticizers are particularly preferable, selected from the group of di-2-ethylhexyl sebacate, 1,2 cyclohexane dicarboxylic acid diisononyl ester, di-2-ethylhexyl adipate, di-2-ethylhexyl phthalate, dioctyl adipate, dihexyl adipate, dibutyl sebacate, di-2-butoxyethyl sebacate, triethyleneglycol-bis-2-ethylhexanoate, triethyleneglycol-bis-n-heptanoate, triethyleneglycol-bis-n-hexanoate, tetraethyleneglycol-bis-n-heptanoate, di-2-butoxyethyl adipate, di-2-butoxyethoxyethyl adipate.

The layers may also contain same or different adhesion regulators, such as the alkaline and/or alkaline earth salts of organic acids disclosed in WO 03/033583 A1. Potassium acetate and/or magnesium acetate have proven to be particularly suitable. The alkaline and/or alkaline earth metal salts can be used alone or in combination in an amount from 0 to 1000 ppm, particularly 100 to 500ppm.

In the present invention, the average degree of acetalisation of the polyvinyl acetal resin is preferably not less than 40 mol%, more preferably not less than 50 mol%. The average degree of acetalisation of the polyvinyl acetal resin is preferably not more than 90 mol%, more preferably not more than 80 mol%.

It tends to be excellent in the compatibility with the solvent such as the plasticizer, when the above average degree of acetalisation is over 40 mol%.

The above average degree of acetalisation of 90 mol% or less tends to be favorable in the process, since the reaction to obtain the polyvinyl acetal resin does not require a long time.

The average vinyl acetate unit content of the polyvinyl acetal resin is preferably not more than 30 mol%, more preferably not more than 20 mol%.

When the average content of the vinyl acetate unit is 30 mol% or less, blocking is difficult to occur in the production of polyvinyl acetal resin, and it is easy to produce. The lower limit of the average content of the above vinyl acetate units is not limited but is usually not less than 0.1 mol%.

The average content of vinyl alcohol units of the polyvinyl acetal resin is preferably not less than 5 mol%, more preferably not less than 15 mol%.

The average content of vinyl alcohol units of the polyvinyl acetal resin is preferably not more than 50 mol%, more preferably not more than 40 mol%.

A further embodiment of the present invention is a process to produce a polyvinyl butyral film comprising the process according to any of the claims 1 to 9 and using the separated layers A and/or B as recycling material added to virgin material to form the starting material for the production of said the polyvinyl butyral film.

The term "virgin material" is intended to denote polyvinyl butyral which previously has not been made into a film.

In an alternative embodiment, the layers A and B comprise ionomer resins which are not specifically limited and include, for example, resins having monomeric units derived from ethylene and monomeric units derived from α,β-unsaturated carboxylic acids, with at least some of the α,β-unsaturated carboxylic acids neutralized by metal ions, and the like. Metal ions include, for example, sodium ions.

Among the ethylene-α,β-unsaturated carboxylic acid copolymers as the base polymer, the content ratio of monomer units derived from α,β-unsaturated carboxylic acids is preferably at least 2% by mass, more preferably at least 5% by mass.

The monomeric unit content of α,β-unsaturated carboxylic acid is preferably not more than 30% by mass, more preferably not more than 20% by mass.

In the present invention, ethylene-based ionomers such as the ionomer of ethylene-acrylic acid copolymers and the ionomer of ethylene-methacrylic acid copolymers are preferred in terms of availability.

As ethylene ionomers, sodium ionomers of ethylene-acrylic acid copolymers and sodium ionomers of ethylene-methacrylic acid copolymers are particularly preferred. Also alternatively, the layers A and B may include, for example, macromolecular compounds having hard and soft segments, as described below, and may include gums such as natural gums, isoprene gums, butadiene gums, chloroprene gums, nitrile gums, butyl gums, ethylene propylene gums, uretane gums, silicone gums, chlorosulfonated polyethylene gums, acrylic gums, fluororubbers, and the like.

It is preferred to use polymeric compounds having a hard segment and a soft segment, for example, polystyrene-based elastomers (soft segments; polybutadiene, polyisoprene, etc.; polystyrene), polyolefin-based elastomers (soft segments; ethylene propylene rubber/hard segments; polypropylene), polyvinyl chloride-based elastomers (soft segments; polyvinyl chloride/hard segments; polyurethane-based elastomers (soft segments; polyether/hard segments; polyurethane), polyester-based elastomers (soft segments; polyether/hard segments; polyester/hard segments; polyester).polyamide-based elastomers (soft segments; polyester diols, polyether diols/hard segments; polyamides < nylons), Examples include polybutadiene-based elastomers (soft segments; amorphous butyl rubber/hard segments; syndiotactic 1,2-polybutadiene), acrylic-based elastomers (soft segments; polyacrylate esters/hard segments; polymethyl methacrylate).

### Examples

A 400 mm wide trilayer polyvinyl butyral film of 800 mm thickness (Trosifol^{®} SC+ available from Kuraray Europe GmbH) was sliced using a band knife G 11 available from Fecken Kirfel having a maximum operating width of 1800 mm. The film was sliced at 3 m/min, generating two outer layers of 250 mm thickness. During operation, the band was moistened and cooled using demineralized water of 20°C.

The two outer layers separated were not contaminated with material from the inner layer and could be recycled completely.

## Claims

1. A process for splitting an interlayer film for laminated glass wherein the interlayer film comprises at least one layer A, comprising at least one polyvinyl butyral resin A and at least one plasticizer PA and at least one layer B, comprising at least one polyvinyl butyral resin B and at least one plasticizer PB, wherein polyvinyl butyral resin A and B are chemically different **characterized in that** the films are cut with a cutting means in form of a band and wherein
a. the cutting means splits the film within layer B at a thickness of 50 to 99%, wherein 1 to 50% of layer B remain at layer A, or
b. the cutting means splits the film within layer A at a thickness of 50 to 99%, wherein 1 to 50% of layer A remain at layer B.

2. The process according to claim 1 **characterized in that** the cutting means is a band knife or a band saw, preferably the cutting means is a continuous band knife.

3. The process according to claim 1 or 2 **characterized in that** the film comprises three layers with a sequence A/B/A.

4. The process according to claim 3 **characterized in that** the cutting means splits in a first step the film within the first layer A at a thickness of 50 to 99%, wherein 1 to 50% of the first layer A remain at layer B and in a second step within the second layer A at a thickness of 50 to 99%, wherein 1 to 50% of the second layer A remain at layer B.

5. The process according to any of the claims 1 to 4 **characterized in that** the film is fed between two rollers towards the cutting means.

6. The process according to any of the claims 1 to 5 **characterized in that** splitting is performed at a temperature of 10 to 20°C.

7. The process according to any of the claims 1 to 6 **characterized in that** the cutting means is guided between two stabilization means.

8. The process according to any of the claims 1 to 7 **characterized in that** a film comprising three layers with a sequence A/B/A is fed between two rollers towards a continuous band knife at a temperature of 10 to 20°C.

9. A process to produce a polyvinyl butyral film comprising the process according to any of the claims 1 to 8 and using the separated layers A and/or B as recycling material added to virgin material to form the starting material for the production of said the polyvinyl butyral film.

## Patentansprüche

1. Verfahren zum Aufspalten einer Zwischenschichtfolie für Verbundglas, wobei die Zwischenschichtfolie mindestens eine Schicht A, die mindestens ein Polyvinylbutyralharz A und mindestens einen Weichmacher PA umfasst, und mindestens eine Schicht B umfasst, die mindestens ein Polyvinylbutyralharz B und mindestens einen Weichmacher PB umfasst, wobei die Polyvinylbutyralharze A und B chemisch verschieden sind, **dadurch gekennzeichnet, dass** die Folien mit einem Schneidemittel in Form eines Bands geschnitten werden und wobei
a. das Schneidemittel die Folie innerhalb der Schicht B in einer Dicke von 50 bis 99 % aufspaltet, wobei 1 bis 50 % der Schicht B an der Schicht A verbleiben oder
b. das Schneidemittel die Folie innerhalb einer Schicht A in einer Dicke von 50 bis 99 % aufspaltet, wobei 1 bis 50 % der Schicht A an der Schicht B verbleiben.

2. Verfahren nach Anspruch 1, **dadurch gekennzeichnet, dass** das Schneidemittel ein Bandmesser oder eine Bandsäge ist, wobei das Schneidemittel bevorzugt ein kontinuierliches Bandmesser ist.

3. Verfahren nach Anspruch 1 oder 2, **dadurch gekennzeichnet, dass** die Folie drei Schichten in einer Reihenfolge von A/B/A umfasst.

4. Verfahren nach Anspruch 3, **dadurch gekennzeichnet, dass** das Schneidemittel die Folie wie folgt aufspaltet: in einem ersten Schritt innerhalb der ersten Schicht A in einer Dicke von 50 bis 99 %, wobei 1 bis 50 % der ersten Schicht A an der Schicht B verbleiben, und in einem zweiten Schritt innerhalb der zweiten Schicht A in einer Dicke von 50 bis 99 %, wobei 1 bis 50 % der zweiten Schicht A an der Schicht B verbleiben.

5. Verfahren nach einem der Ansprüche 1 bis 4, **dadurch gekennzeichnet, dass** die Folie zwischen zwei Walzen auf das Schneidemittel zu geführt wird.

6. Verfahren nach einem der Ansprüche 1 bis 5, **dadurch gekennzeichnet, dass** das Spalten bei einer Temperatur von 10 bis 20 °C ausgeführt wird.

7. Verfahren nach einem der Ansprüche 1 bis 6, **dadurch gekennzeichnet, dass** das Schneidemittel zwischen zwei Stabilisierungsmitteln geführt wird.

8. Verfahren nach einem der Ansprüche 1 bis 7, **dadurch gekennzeichnet, dass** eine Folie, die drei Schichten in einer Reihenfolge von A/B/A umfasst, zwischen zwei Walzen auf das kontinuierliche Bandmesser zu bei einer Temperatur von 10 bis 20 °C geführt wird.

9. Verfahren zum Herstellen einer Polyvinylbutyralfolie, umfassend das Verfahren nach einem der Ansprüche 1 bis 8 und Verwenden der einzelnen Schichten A und/oder B als Wiederverwertungsmaterial, das unbenutztem Material zugegeben wird, um das Ausgangsmaterial für die Herstellung der Polyvinylbutyralfolie zu bilden.

## Revendications

1. Procédé de division d'un film d'intercouche pour verre laminé dans lequel le film d'intercouche comprend au moins une couche A, comprenant au moins une résine A de polyvinyl butyral et au moins un plastifiant PA et au moins une couche B, comprenant au moins une résine B de polyvinyl butyral et au moins un plastifiant PB, les résines A et B de polyvinyl butyral étant chimiquement différentes **caractérisé en ce que** les films sont coupés avec un moyen de découpage sous forme d'une bande et
a. le moyen de découpage divisant le film dans la couche B à une épaisseur de 50 à 99 %, 1 à 50 % de la couche B restant à la couche A, ou
b. le moyen de découpage divisant le film dans la couche A à une épaisseur de 50 à 99 %, 1 à 50 % de la couche A restant à la couche B.

2. Procédé selon la revendication 1 **caractérisé en ce que** le moyen de découpage est un couteau à bande ou une scie à bande, de préférence le moyen de découpage est un couteau à bande continue.

3. Procédé selon la revendication 1 ou 2 **caractérisé en ce que** le film comprend trois couches avec une séquence A/B/A.

4. Procédé selon la revendication 3 **caractérisé en ce que** le moyen de découpage divise dans une première étape le film dans la première couche A à une épaisseur de 50 à 99 %, 1 à 50 % de la première couche A restant à la couche B et dans une seconde étape dans la seconde couche A à une épaisseur de 50 à 99 %, 1 à 50 % de la seconde couche A restant à la couche B.

5. Procédé selon l'une quelconque des revendications 1 à 4 **caractérisé en ce que** le film est alimenté entre deux rouleaux vers le moyen de découpage.

6. Procédé selon l'une quelconque des revendications 1 à 5 **caractérisé en ce que** la division est effectuée à une température de 10 à 20 °C.

7. Procédé selon l'une quelconque des revendications 1 à 6 **caractérisé en ce que** le moyen de découpage est guidé entre deux moyens de stabilisation.

8. Procédé selon l'une quelconque des revendications 1 à 7 **caractérisé en ce qu'un** film comprenant trois couches avec une séquence A/B/A est alimenté entre deux rouleaux vers un couteau à bande continue à une température de 10 à 20 °C.

9. Procédé de production d'un film de polyvinyl butyral comprenant le procédé selon l'une quelconque des revendications 1 à 8 et utilisant les couches séparées A et/ou B comme matériau de recyclage ajouté à un matériau vierge pour former le matériau de départ pour la production dudit film de polyvinyl butyral.
